# EUROPÄISCHE PATENTANMELDUNG

(11) **EP 4 621 009 A1**
(43) Veröffentlichungstag der Anmeldung: **24.09.2025**
(21) Anmeldenummer: 24165339.3
(22) Anmeldetag: 21.03.2024
(51) Int. Cl.: C08L 67/02, C08G 63/06, B65D 85/804

(54) **POLYBUTYLENSUCCINAT UND AMORPHES POLYHYDROXYALKANOAT UMFASSENDE ZUSAMMENSETZUNG SOWIE DIESE ENTHALTENDE VERPACKUNG**

(71) Anmelder: Tchibo GmbH, 22297 Hamburg (DE)
(72) Erfinder: WICHE, Marius-Konstantin, 22763 Hamburg (DE); MAYR, Viktoria, 22926 Ahrensburg (DE); DUENSING, Jasmin, 22303 Hamburg (DE)
(74) Vertreter: Frei Patent Attorneys

(57) **Zusammenfassung**

Zusammensetzung, insbesondere zur Herstellung von Portionenkapseln, umfassend Polybutylensuccinat (PBS) und mindestens ein amorphes Polyhydroxyalkanoat (aPHA) Copolymer von 3-Hydroxybutansäure (3HB) und mindestens einem von 3-Hydroxybutansäure (3HB) verschiedenen Comonomer, wobei der Massenanteil an Polybutylensuccinat (PBS), bezogen auf das Gesamtgewicht der Zusammensetzung, zwischen 75 Gew.-% und 90 Gew.-% beträgt, wobei der Massenanteil an amorphem Polyhydroxyalkanoat (aPHA) Copolymer, bezogen auf das Gesamtgewicht der Zusammensetzung, zwischen 10 Gew.-% und 25 Gew.-% beträgt, und wobei der Massenanteil des mindestens einen von 3-Hydroxybutansäure (3HB) verschiedenen Comonomers, bezogen auf das Gewicht des amorphen Polyhydroxyalkanoat (aPHA) Copolymers, zwischen 25 Gew.-% und 85 Gew.-% beträgt.

## Beschreibung

Die vorliegende Erfindung liegt auf dem Gebiet biologisch abbaubarer Polymerzusammensetzungen, insbesondere für Portionenkapseln. Die Erfindung betrifft eine Zusammensetzung, eine Portionenkapsel bestehend aus oder umfassend eine solche Zusammensetzung sowie die Verwendung solcher Zusammensetzungen zum Verpacken eines Getränkeausgangsstoffs, insbesondere Kaffee.

Sogenannte Kapselmaschinen zum Zubereiten von Getränken oder Getränkebestandteilen mittels einer Portionenkapsel enthaltend eine vorportionierte Menge eines Getränkeausgangsstoffs erfreuen sich aufgrund ihrer Benutzerfreundlichkeit sowie der grossen Auswahl an verfügbaren Geschmacksrichtungen wachsender Beliebtheit. Bei dem Getränkeausgangsstoff kann es sich insbesondere um eine Kaffeepulvermischung oder um Tee handeln, wobei in besagten Systemen im Allgemeinen heisses Wasser - meist unter Druck - in eine Portionenkapsel eingeführt wird, um durch Extraktion ein Kaffee- oder Teegetränk zuzubereiten. Für das Einführen des heissen Wassers wird die Kapsel oft auf der einen Seite (Injektionsseite) angestochen. Für das Ausleiten des gebrühten Getränks, im Allgemeinen auf der anderen Seite der Kapsel (Extraktionsseite) sind verschiedene Möglichkeiten bekannt. Einerseits gibt es Systeme, bei denen auch extraktionsseitig ein Anstechen durch entsprechende Perforationsdorne vorgesehen ist. Andererseits sind Systeme bekannt, bei denen eine extraktionsseitige Begrenzung der Kapsel unter dem Innendruck während des Brühprozesses angestochen oder angerissen wird, wofür ein kapselexternes (in der Brühkammer der entsprechenden Kapselmaschine vorhandenes) oder ein kapselinternes Mittel vorhanden sein kann. Schliesslich gibt es auch Kapseln, die bereits geöffnet sind, bei denen also keine Kapselwandung oder Membran angestochen oder angerissen werden muss, um das Getränk auszuleiten.

Folglich werden an Portionenkapseln üblicherweise hohe Anforderung bezüglich verschiedener Parameter gestellt. So müssen Portionenkapseln üblicherweise gute mechanische Eigenschaften aufweisen, eine gute Verarbeitbarkeit aufweisen und gleichzeitig sollte eine kostengünstige Herstellung möglich sein. Bei empfindlichen Lebensmitteln wie Kaffee werden zudem geringe Sauerstoff- und Wasserdampfdurchlässigkeit gewünscht, damit die verpackten Güter möglichst lange ohne Qualitätseinbussen haltbar sind.

Um diese Anforderungen zu erfüllen, sind aus dem Stand der Technik, beispielsweise aus der EP 1 165 398 A1, vor allem Portionenkapseln bekannt, welche zu einem hohen Anteil aus Mehrschichtfolien oder Mehrschichtmaterialien wie z.B. PET/Alu/PE oder Papier/PET/Alu/PE bestehen. Nachteilig an derartigen Portionenkapseln ist vor allem der nach der Verwendung anfallende Abfall beziehungsweise das problematische Umweltverhalten, da eine Trennung der verschiedenartigen Materialien nicht bzw. zumindest nicht ohne Weiteres erfolgen kann; als Entsorgungsmethode kommt somit oftmals nur die thermische Behandlung, d.h. die Verbrennung, oder die Ablagerung auf Deponien in Frage, wo entsprechende Mehrschichtmaterialien mehrere hundert Jahre lang praktisch unverändert bleiben können.

Vor diesem Hintergrund wird zunehmend gefordert, dass Verpackungsmaterialien im Allgemeinen und Portionenkapseln im Speziellen nach ihrer Benutzung umweltfreundlicher entsorgt werden können. Es ist also wünschenswert, wenn Verpackungen wie Portionenkapseln in praktisch nutzbaren Zeiträumen biologisch abgebaut werden können und sich somit zersetzen, wenn sie in die Umwelt gelangen.

In den vergangenen Jahren sind eine Reihe biologisch abbaubarer Polymere für technische und/oder industrielle Anwendungen entwickelt worden, wie z.B. aliphatische Polyesterharze, Polyvinylalkohol und Polysaccharide. Allerdings hat sich gezeigt, dass sich diese Materialien im Boden nur langsam abbauen und selbst im Kompost für einen weitgehenden biologischen Abbau in praktisch nutzbaren Zeiträumen von ca. drei Monaten, jedenfalls von nicht mehr als einem Jahr, höhere Temperaturen erforderlich sind. Darüber hinaus weisen die verfügbaren biologisch abbaubaren Polymere häufig schlechtere und teilweise unbefriedigende Materialeigenschaften als die bisher üblicherweise in Portionenkapseln für Kapselmaschinen eingesetzten Polymere auf, was ihren breiten Einsatz in diesen Anwendungen bisher verhinderte.

Es ist Aufgabe der vorliegenden Erfindung, eine Zusammensetzung, insbesondere für Portionenkapseln, bereitzustellen, welche sich durch eine besonders gute biologische Abbaubarkeit verbunden mit für die Verwendung als Portionenkapsel vorteilhaften mechanischen Eigenschaften, insbesondere hinsichtlich Schweissbarkeit, Druckbeständigkeit und/oder Dehnbarkeit, auszeichnet.

Die Aufgabe wird durch eine Zusammensetzung, eine Portionenkapsel, ein Verfahren zur Herstellung einer Portionenkapsel, sowie die Verwendung einer Zusammensetzung zum Verpacken eines Getränkeausgangsstoffs umfassend die Merkmale der unabhängigen Ansprüche gelöst. Die abhängigen Ansprüche, die Beschreibung und die Figuren beschreiben Weiterbildungen und besondere Ausführungsformen der Erfindung.

Die Aufgabe wird insbesondere gelöst durch eine Zusammensetzung, insbesondere für Portionenkapseln, umfassend
i. Polybutylensuccinat, und
ii. mindestens ein amorphes Polyhydroxyalkanoat Copolymer von
   a) 3-Hydroxybutansäure und
   b) mindestens einem von 3-Hydroxybutansäure verschiedenen Comonomer.

Der Massenanteil an Polybutylensuccinat beträgt dabei zwischen 75 Gew.-% und 90 Gew.-%, bezogen auf das Gesamtgewicht der Zusammensetzung. Der Massenanteil an amorphem Polyhydroxyalkanoat Copolymer beträgt dabei zwischen 10 Gew.-% und 25 Gew.-%, ebenfalls bezogen auf das Gesamtgewicht der Zusammensetzung. Der Massenanteil des mindestens einen von 3-Hydroxybutansäure verschiedenen Comonomers beträgt dabei zwischen 25 Gew.-% und 85 Gew.-%, bezogen auf das Gewicht des amorphen Polyhydroxyalkanoat Copolymers.

Für den Fall, dass die Zusammensetzung zwei oder mehr amorphe Polyhydroxyalkanoat-Copolymere enthält, gelten die vorgenannten Massenanteile für die Gesamtmenge aller amorphen Polyhydroxyalkanoat Copolymere der Komponente ii. der Zusammensetzung.

Es hat sich herausgestellt, dass durch den Zusatz von zumindest einem amorphen Polyhydroxyalkanoat Copolymer zu Polybutylensuccinat die biologische Abbaubarkeit der resultierenden Zusammensetzung signifikant verbessert werden kann. Dabei hat sich überraschenderweise gezeigt, dass für den Einsatz in Verpackungen relevante mechanische Eigenschaften der resultierenden Zusammensetzungen, insbesondere die Schweissbarkeit, Druckbeständigkeit und Dehnbarkeit der resultierenden Zusammensetzungen, im Vergleich zu entsprechenden Referenzzusammensetzungen ohne amorphes Polyhydroxyalkanoat Copolymer nicht ungebührend verschlechtert werden.

Ohne sich auf diese Erklärung beschränken zu wollen, bewirkt die Zugabe des amorphen Polyhydroxyalkanoat Copolymers eine Steigerung der amorphen Anteile in der Zusammensetzung, sodass Mikroorganismen in der Kompostierung und/oder Vergärung bessere Angriffsmöglichkeiten an die Zusammensetzung haben, wodurch der Zerfall der Zusammensetzung beschleunigt wird.

Mit Blick auf die nachfolgend noch näher Beschriebene Verwendung der hierin beschriebenen Zusammensetzungen zum Verpacken eines Getränkeausgangsstoffs, insbesondere zur Herstellung von Portionenkapseln für die Herstellung eines Getränks oder Getränkebestandteils durch Extraktion unter Zugabe von unter Druck stehendem Heisswasser, hat sich überraschenderweise herausgestellt, dass die Zugabe von amorphem Polyhydroxyalkanoat Copolymer zu Polybutylensuccinat die Flexibilität des resultierenden Polymerblends derart erhöht, dass Rissbildungen an scharfen Übergängen der Portionenkapseln während Schweissprozessen verhindert werden können. Durch die erhöhte Flexibilität wird zudem ein Brechen beim Brühprozess verhindert und das Anstechen in den Brühkammern gelingt.

Im Rahmen des vorliegenden Textes wird unter "biologisch abbaubar" die Möglichkeit der Zersetzung der Zusammensetzung durch Lebewesen (insbesondere Saprobionten) oder deren Enzyme verstanden. Insbesondere kann der Begriff "biologisch abbaubar" im Rahmen des vorliegenden Textes die biologische Abbaubarkeit gemäss der europäischen Norm EN 13432 (ab Ende 2021) bedeuten. Zusätzlich oder alternativ kann er die biologische Abbaubarkeit gemäss der europäischen Norm EN 14995 (ab Ende 2021) bedeuten. Somit bezieht sich "biologisch abbaubar" insbesondere auf "biologisch abbaubar nach EN 13432 und/oder nach EN 14995".

Obwohl der Begriff "kompostierbar" häufig synonym verwendet wird, unterscheidet er sich in seiner Bedeutung von dem Begriff "biologisch abbaubar". Während "biologisch abbaubar" einfach bedeutet, dass ein organisches Material von Mikroorganismen verbraucht (mineralisiert) werden kann, z.B. in Böden, Belebtschlamm oder Gewässern, stellt "kompostierbar" die besondere Anforderung, dass das organische Material unter Kompostierungsbedingungen, d.h. in der Regel bei erhöhten Temperaturen, abgebaut wird. Im Rahmen des vorliegenden Text bedeuten "industriell kompostierbar" bzw. "heimkompostierbar" kompostierbar bzw. heimkompostierbar gemäss der europäischen Norm EN 13432 (ab Ende 2021) für Verpackungen und/oder gemäss der europäischen Norm EN 14995 (ab Ende 2021) für Kunststoffe/synthetische Materialien allgemein.

In einer Ausführungsform ist die Zusammensetzung industriell kompostierbar und/oder heimkompostierbar.

In einer Ausführungsform der Zusammensetzung handelt es sich bei dem amorphen Polyhydroxyalkanoat Copolymer um ein biobasiertes amorphes Polyhydroxyalkanoat Copolymer.

Ein amorphes Polyhydroxyalkanoat Copolymer wird im Rahmen der Erfindung als biobasiert verstanden, wenn es zu mindestens 51 Gew.-%, vorzugsweise zu mehr als 75 Gew.-%, weiter bevorzugt zu mehr als 95 Gew.-%, bezogen auf das Gewicht des amorphen Polyhydroxyalkanoat Copolymers, aus Substanzen gewonnen wurde oder wird, bei denen es sich um nachwachsende Substanzen handelt oder die aus nachwachsenden Substanzen gewonnen wurden. Der biobasierte Anteil lässt sich mithilfe der Radiocarbonmethode nach der DIN EN 16640:2017-08 bestimmen. Bei dieser Bestimmungsmethode wird ausgenutzt, dass in der Atmosphäre ständig geringe Mengen des radioaktiven Kohlenstoffisotops ¹⁴C gebildet werden. Dieses Isotop gelangt als ¹⁴CO₂ in Pflanzen und Mikroorganismen und wird anschließend in verschiedenen Biomassen weiterverwendet. Aufgrund des radioaktiven Zerfalls von ¹⁴C lässt sich über den Anteil an ¹⁴C ein Rückschluss darauf ziehen, wie alt die für die Herstellung der Materialien verwendeten Ausgangsverbindungen sind und somit, ob ein Material aus frischer Biomasse hergestellt wurde oder aus fossilen Kohlenstoffquellen, wie z.B. Erdöl. Der Begriff "biobasiert" wird im Rahmen der Erfindung so verwendet, wie er in der DIN EN 16640:2017-08 definiert wird. Biobasierte Materialien sind somit vollständig oder teilweise von Biomassen abgeleitet. Unter einem biobasierten Material werden im Rahmen der Erfindung beispielsweise Pflanzen, Mikroorganismen oder Tiere sowie deren Stoffwechselprodukte und Teile verstanden, aber auch Materialien, die daraus durch mechanische und/oder chemische Umformung gewonnen werden. Ein biobasiertes amorphes Polyhydroxyalkanoat (aPHA) Copolymer ist somit ein Polymer, dass zu mindestens 51 Gew.-%, vorzugsweise zu mehr als 75 Gew.-%, weiter bevorzugt zu mehr als 95 Gew.-%, (ganz besonders bevorzugt vollständig) bezogen auf das Gewicht des amorphen Polyhydroxyalkanoat (aPHA) Copolymers, aus nachwachsenden Substanzen gewonnen bzw. abgeleitet wird.

Wie allgemein üblich wird auch im Rahmen dieses Textes unter biobasierten Materialien kein Erdöl oder andere fossile Quellen verstanden, auch wenn diese in geologischer Vorzeit aus Abbauprodukten von toten Pflanzen und Tieren entstanden sind.

In einer Ausführungsform der Zusammensetzung wird das mindestens eine von 3-Hydroxybutansäure (3HB) verschiedene Comonomer aus der Gruppe bestehend aus 3-Hydroxypropionsäure (3HP), 3-Hydroxyvaleriansäure (3HV), 4-Hydroxybutansäure (4HB), 5-Hydroxyvaleriansäure (5HV), 3-Hydroxyhexansäure (3HH), 3-Hydroxyoctansäure (3HO) und Kombinationen aus diesen Verbindungen ausgewählt. Amorphe Polyhydroxyalkanoate von 3-Hydroxybuttersäure und einem oder mehreren dieser Comonomere sind allgemeinhin kommerziell gut verfügbar und haben sich als besonders wirksam für die Steigerung der amorphen Anteile der Zusammensetzung herausgestellt. Die Auswahl von 4-Hydroxybutansäure (4HB) als Comonomer ist besonders vorteilhaft, da es sich bei dem resultierenden P(3HB-co-4HB) um einen biologisch abbaubaren und biokompatiblen Thermoplasten handelt, der durch mikrobielle Fermentation aus einer breiten Palette erneuerbarer Rohstoffe gewonnen werden kann und der - in Abhängigkeit des Anteils an 4-Hydroxybutansäure (4HB) an der Monomerzusammensetzung - eine grosse Bandbreite an mechanischen Festigkeiten bzw. visco-elastischen Eigenschaften aufweist.

In einer Ausführungsform der Zusammensetzung beträgt der Massenanteil an amorphem Polyhydroxyalkanoat Copolymer, bezogen auf das Gesamtgewicht der Zusammensetzung, zwischen 18 Gew.-% und 22 Gew.-%. In diesem Bereich wurde ein besonders vorteilhafter Ausgleich zwischen der biologischen Abbaubarkeit und den für die Verarbeitbarkeit relevanten visco-elastischen Eigenschaften der Zusammensetzung gefunden. Ein Massenanteil an amorphem Polyhydroxyalkanoat-Copolymer von in etwa 20 Gew.-%, bezogen auf das Gesamtgewicht der Zusammensetzung, hat sich diesbezüglich als ganz besonders vorteilhaft erwiesen.

In einer Ausführungsform der Zusammensetzung beträgt der Massenanteil an 3-Hydroxybutansäure (3HB) zwischen 9 Gew.-% und 15 Gew.-%, bevorzugt zwischen 11 Gew.-% und 13 Gew.-%, besonders bevorzugt etwa 12 Gew.-%, bezogen auf das Gesamtgewicht der Zusammensetzung. In diesem Bereich wird die Kristallinität im Vergleich zu reinem Polyhydroxybutyrat (P3HB) so weit reduziert, dass die biologische Abbaubarkeit der Zusammensetzung signifikant erhöht ist.

In einer Ausführungsform der Zusammensetzung beträgt der Massenanteil an von 3-Hydroxybutansäure (3HB) verschiedenem Comonomer zwischen 4 Gew.-% und 10 Gew.-%, bevorzugt zwischen 6 Gew.-% und 8 Gew.-%, besonders bevorzugt etwa 7 Gew.-%, bezogen auf das Gesamtgewicht der Zusammensetzung. In diesem Bereich wird die Kristallinität im Vergleich zu reinem Polyhydroxybutyrat (P3HB) so weit reduziert, dass die biologische Abbaubarkeit der Zusammensetzung signifikant erhöht ist. Gleichzeitig weisen derartige Zusammensetzungen im Vergleich zu entsprechenden Zusammensetzungen ohne amorphes Polyhydroxyalkanoat eine ausreichende Reissfestigkeit und Zähigkeit zum Thermoformen auf.

Insbesondere kann es sich bei dem von 3-Hydroxybutansäure (3HB) verschiedenen Comonomer um 4-Hydroxybutansäure (4HB) handeln, wobei der Massenanteil an 4-Hydroxybutansäure (4HB) zwischen 4 Gew.-% und 10 Gew.-%, bevorzugt zwischen 6 Gew.-% und 8 Gew.-%, besonders bevorzugt etwa 7 Gew.-%, bezogen auf das Gesamtgewicht der Zusammensetzung, beträgt. In diesem Bereich werden die vorstehend zu P(3HB-co-4HB) genannten Vorteile erzielt, insbesondere im Hinblick auf die Verwendung einer Zusammensetzung gemäss einer der hierin beschriebenen Ausführungsformen zur Herstellung von Portionenkapseln.

In einer Ausführungsform umfasst die Zusammensetzung ferner mindestens einen Füllstoff ausgewählt aus der Gruppe bestehend aus Russ, Cyanursäure, Uracil, Thymin, Glimmer, Talkum, Siliciumdioxid, Bornitrid, Bariumnitrid, Nanoton, Calciumcarbonat, synthetisierte Kieselsäure und deren Salze, Metallsalze von Organophosphaten, Kaolin und Kombinationen aus diesen Substanzen. Die Auswahl von Talkum als Füllstoff ist besonders vorteilhaft, weil Talkum die Festigkeit, Steifigkeit und Härte des Polymerblends erhöhen und zu einer besseren Temperaturbeständigkeit führen kann. Durch die Zugabe von Talkum kann die Dimensionsstabilität des Polymerblends erhöht werden, weil es den Schrumpf und die Verformung des Polymerblends beim Abkühlen reduziert. Schliesslich kann Talkum dazu beitragen, die Oberflächengüte des Polymerblends zu verbessern, indem es die Bildung von Oberflächendefekten wie Blasen oder Unebenheiten reduziert. Auch hilft Talkum gegen das Verblocken der Zusammensetzung in Polymergranulatform.

In Ausführungsformen beträgt der Massenanteil an Füllstoffen zwischen 1 Gew.-% und 10 Gew.-%, bevorzugt etwa 5 Gew.-%, bezogen auf das Gesamtgewicht der Zusammensetzung.

In einer Ausführungsform umfasst die Zusammensetzung ferner mindestens ein Mittel zur Verhinderung der Degradation (Korrosion) durch Autoxidation, Alkylradikalfänger, Stabilisatoren, Kompatibilisatoren, Verarbeitungshilfsmittel, Antistatikmittel, Farbstoffe, optische Aufheller, Treibmittel, Flammschutzmittel, Füllstoffe, Verstärkungsmittel, Haftvermittler und Biozide. Dem Fachmann sind entsprechende Mittel, auch Additive genannt, bekannt.

In Ausführungsformen beträgt der Massenanteil an Additiven zwischen 0 Gew.-% und 5 Gew.-%, vorzugsweise zwischen 0,1 Gew.-% und 3,5 Gew.-%, besonders bevorzugt zwischen 0,5 Gew.-% und 2,5 Gew.-%, bezogen auf das Gesamtgewicht der Zusammensetzung.

In einer Ausführungsform weist die Zusammensetzung im Vergleich zu einer Referenzzusammensetzung ohne amorphes Polyhydroxyalkanoat Copolymer eine wenigstens 25% schnellere biologische Abbaugeschwindigkeit, bestimmt nach ISO 14855-1, auf. Alternativ oder zusätzlich dazu weist eine Ausführungsform der Zusammensetzung im Vergleich zu einer Referenzzusammensetzung ohne amorphes Polyhydroxyalkanoat Copolymer eine wenigstens 90% schnellere biologische Abbaugeschwindigkeit, bestimmt nach ISO 15985, auf.

Unter einer "Referenzzusammensetzung" wird im Rahmen der vorliegenden Erfindung eine Zusammensetzung verstanden, die mit einer getesteten anspruchsgemässen Zusammensetzung identisch ist, mit der Ausnahme, dass sie das amorphe Polyhydroxyalkanoat Copolymer nicht enthält. Insbesondere wird unter einer "Referenzzusammensetzung" eine Zusammensetzung verstanden, in der das amorphe Polyhydroxyalkanoat Copolymer durch Polyhydroxybutyrat (P3HB) ersetzt ist.

Sofern nicht anders angegeben, können eine oder mehrere der vorgenannten Ausführungsformen beliebig miteinander kombiniert werden.

In einer Ausführungsform besteht die Zusammensetzung im Wesentlichen aus:
i. 75 Gew.-% bis 90 Gew.-% Polybutylensuccinat (PBS),
ii. 10 Gew.-% bis 25 Gew.-% amorphem Polyhydroxyalkanoat (aPHA) Copolymer von 3-Hydroxybutansäure (3HB) und mindestens einem Comonomer ausgewählt aus der Gruppe bestehend aus 3-Hydroxypropionsäure (3HP), 3-Hydroxyvaleriansäure (3HV), 4-Hydroxybutansäure (4HB), 5-Hydroxyvaleriansäure (5HV), 3-Hydroxyhexansäure(3HH) und 3-Hydroxyoctansäure (3HO), insbesondere Poly(3-hydroxybutyrat-co-4-hydroxybutyrat);
iii. Optional, 1 Gew.-% bis 10 Gew.-% mindestens eines Füllstoffs, insbesondere Talkum; und
iv. Optional, bis zu 5 Gew.-% mindestens eines Additivs;
jeweils bezogen auf das Gesamtgewicht der Zusammensetzung. Der Massenanteil an von 3-Hydroxybutansäure (3HB) verschiedenem Comonomer beträgt dabei zwischen 25 Gew.-% und 85 Gew.-%, bezogen auf das Gewicht des amorphen Polyhydroxyalkanoat (aPHA) Copolymers.

Ein weiterer Aspekt der Erfindung betrifft eine Portionenkapsel, welche aus einer hierin beschriebenen Zusammensetzung besteht oder eine solche umfasst.

Unter einer Portionenkapsel wird im Rahmen der Erfindung eine in eine Kapselaufnahme einer Getränkezubereitungsmaschine einsetzbare Verpackung verstanden, welche mindestens einen mittels Wasser extrahierbaren Getränkeausgangsstoff, insbesondere Kaffee oder Tee, enthält. Auch Teile einer solchen Verpackung werden im Rahmen der Erfindung als Portionenkapsel verstanden, sofern es sich um eine abgeschlossene Einheit handelt. So wird beispielsweise auch jeweils ein Basiselement einer Portionenkapsel als Portionenkapsel verstanden, auch wenn üblicherweise die Kombination aus Basiselement und Kapseldeckel zum Verpacken des Getränkeausgangsstoffs eingesetzt wird.

In einer Ausführungsform weist die Portionenkapsel ein Basiselement mit einem Bodenbereich und einer umlaufenden Seitenwand auf, wobei der Bodenbereich und die umlaufende Seitenwand einen Innenraum zum Bevorraten eines mittels Wasser extrahierbaren Getränkeausgangsstoffs bilden. Bei dem Getränkeausgangsstoff kann es sich insbesondere um Kaffee oder Tee handeln. Somit handelt es sich in einer Ausführungsform der Portionenkapsel um eine Kaffee- bzw. Teekapsel.

In einer Ausführungsform der Portionenkapsel umfasst oder besteht das Basiselement aus einer Zusammensetzung gemäss einer der zuvor beschriebenen Ausführungsformen. Insbesondere umfassen oder bestehen der Bodenbereich und die umlaufende Seitenwand aus derselben Zusammensetzung gemäss einer der zuvor beschriebenen Ausführungsformen. Eine solche Ausführungsform weist für das gesamte Basiselement die zuvor beschriebenen vorteilhaften Eigenschaften auf und ist besonders einfach herstellbar, beispielsweise im Tiefzieh- oder Spritzgussverfahren.

In einer Ausführungsform beträgt eine Wandstärke der Portionenkapsel zwischen 100 µm und 500 µm, bevorzugt zwischen 200 µm und 400 µm, insbesondere etwa 300 µm. Insbesondere beträgt eine Wandstärke der umlaufenden Seitenwand einer Portionenkapsel mit einem Basiselement zwischen 100 µm und 500 µm, bevorzugt zwischen 200 µm und 400 µm, insbesondere etwa 300 µm.

Ein weiterer Aspekt der Erfindung betrifft ein Verfahren zur Herstellung einer Portionenkapsel gemäss einer der zuvor beschriebenen Ausführungsformen. Das Verfahren umfasst die folgenden Schritte:
a) Mischen und/oder Aufschmelzen einer Zusammensetzung gemäss einer der zuvor beschriebenen Ausführungsformen zum Erhalt eines Polymerblends; und
b) Umformen des in Schritt a) erhaltenen Polymerblends zum Erhalt der Portionenkapsel;
c) Optional, Befüllen der in Schritt b) erhaltenen Portionenkapsel mit einer Portion eines Getränkeausgangsstoffs und Verschliessen der mit dem
Getränkeausgangsstoff befüllten Portionenkapsel mit einem Kapseldeckel, insbesondere durch Verschweissen eines Kapseldeckels umfassend eine Zusammensetzung gemäss einer der zuvor beschriebenen Ausführungsformen mit einem Basiselement der Portionenkapsel.

In einer Ausführungsform des Verfahrens erfolgt das Mischen und/oder Aufschmelzen der Zusammensetzung in Schritt a) in einem Extruder. Der Einsatz von Extrudern beim Mischen und/oder Aufschmelzen der Komponenten einer Zusammensetzung gemäss einer der hierin beschriebenen Ausführungsformen ermöglicht eine besonders effiziente, homogene und kontrollierte Verarbeitung der Zusammensetzung.

In einer Ausführungsform des Verfahrens erfolgt das Umformen des in Schritt a) erhaltenen Polymerblends durch Tiefziehen. Das Tiefziehverfahren ist im Vergleich zu anderen Formgebungsverfahren wie Spritzguss oft kostengünstiger, da es weniger Werkzeug- und Maschineneinrichtung erfordert. Dennoch ermöglicht das Tiefziehverfahren eine schnelle Herstellung grosser Stückzahlen von Teilen, was es ideal für die Massenproduktion macht. Durch Tiefziehverfahren kann eine Vielzahl an Formen mit relativ geringem Aufwand realisiert werden, was die Gestaltungsfreiheit der Portionenkapseln erhöht.

In einer Ausführungsform des Verfahrens erfolgt das Umformen des in Schritt a) erhaltenen Polymerblends durch Spritzgiessen. Das Spritzgussverfahren erlaubt eine besonders schnelle Herstellung grosser Stückzahlen an Portionenkapseln mit einer im Vergleich zum Tiefziehverfahren noch grösserer Formgestaltungsfreiheit. Darüber hinaus erlaubt das Spritzgussverfahren die Herstellung von Portionenkapseln mit exakt definierten, insbesondere gleichmässigen, Wandstärken.

In einer Ausführungsform des Verfahrens wird die Zusammensetzung gemäss einer der zuvor beschriebenen Ausführungsformen in Schritt a) als Granulat bereitgestellt. Das eingesetzte Granulat umfasst die Zusammensetzung gemäss einer der zuvor beschriebenen Ausführungsformen in homogener und fester Form. Mit anderen Worten besteht das Granulat bereit aus dem zu erhaltenen Polymerblend, wobei das Granulat in Schritt a) im Wesentlichen nur noch aufgeschmolzen werden muss.

In einer Ausführungsform des Verfahrens beträgt das Gewicht der Portion eines Getränkeausgangsstoffs, insbesondere einer Kaffeepulvermischung, mit der die Portionenkapsel in Schritt c) befüllt wird, zwischen 5 und 10 Gramm.

Ein weiterer Aspekt der Erfindung betrifft die Verwendung einer Zusammensetzung gemäss einer der zuvor beschriebenen Ausführungsformen zum Verpacken eines Getränkeausgangsstoffs. Bei dem zu verpackenden bzw. verpackten Getränkeausgangsstoff kann es sich insbesondere um Kaffee oder Tee handeln.

Nachfolgend wird der Erfindungsgegenstand anhand von Ausführungsbeispielen, welche in den beiliegenden Figuren dargestellt sind, näher erläutert. Es zeigen jeweils schematisch:
- Figur 1:: eine Seitenansicht einer beispielhaften Verpackung;

- Figur 2:: eine perspektivische Ansicht eines längs halbierten Basiselements eines beispielhaften Portionsbehälters;
- Figur 3:: einen Querschnitt durch eine Seitenwand eines Basiselements im Bereich X aus Figur 2;
- Figur 4:: Abbaukurven zu Vergleichsversuch 1 (thermophil anaerob);
- Figur 5:: Abbaukurven zu Vergleichsversuch 2 (aerob).

Die nachfolgend beschriebenen Ausführungsbeispiele stehen lediglich beispielhaft für den Erfindungsgegenstand und haben keine beschränkende Wirkung. Grundsätzlich sind in den Figuren gleiche Teile mit gleichen Bezugszeichen versehen.

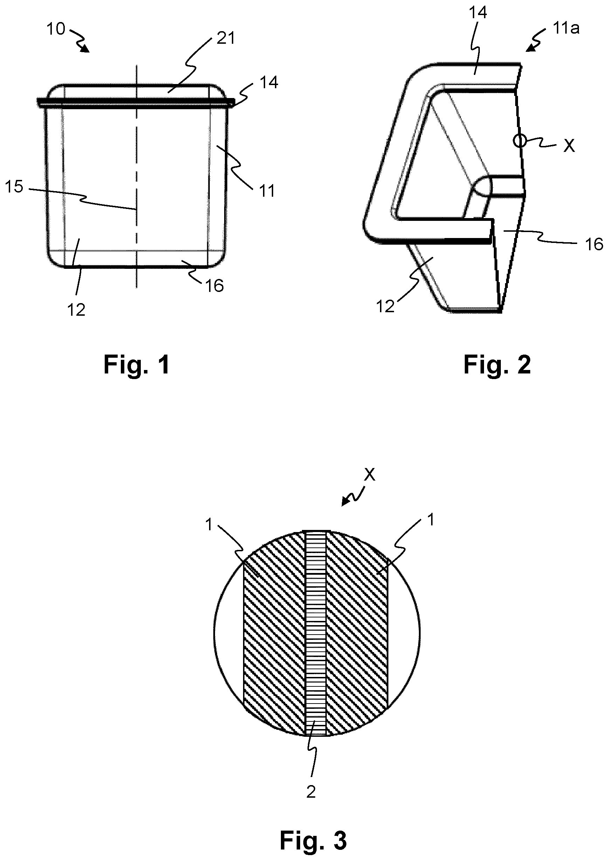

Figur 1 zeigt eine beispielshafte Verpackung in der Form eines Portionenkapsel 10. Die Portionenkapsel 10 weist ein Basiselement 11 mit einer Basiselementachse 15, einem Bodenbereich 16 und einer umlaufenden Seitenwand 12 auf. Das gezeigte Basiselement 11 hat hier die Form eines Bechers, wobei die Basiselementachse 15 eine Becherachse ist. Bodenbereich 16 und die umlaufende Seitenwand 12 bilden einen Innenraum, in welchem ein mittels Wasser extrahierbarer Getränkeausgangsstoff wie beispielsweise eine Kaffeepulvermischung oder Tee bevorratbar ist. Die Portionenkapsel 10 weist ferner einen Kapseldeckel 21 auf, der entlang eines umlaufenden Flansches 14 des Basiselements 11 befestigt ist, wobei das Basiselement 11 und der Kapseldeckel 21 zusammen eine äussere Behälterwand bilden und einen hermetisch abgeschlossenen Kapselinnenraum definieren. Basiselement 11 und Kapseldeckel 21 zusammen begrenzen also ein hermetisch abgeschlossenes Volumen zum Bevorraten einer Substanz, insbesondere eines mittels Wasser extrahierbaren Getränkeausgangsstoffs zur Zubereitung eines Getränks durch Durchfluss von Wasser durch die Portionenkapsel. Der gezeigte Flansch 14 ist als Kragen der umlaufenden Seitenwand 12 realisiert und kann dementsprechend auch als umlaufender Kragen 14 bezeichnet werden. In der gezeigten Ausführungsform umfasst zumindest das Basiselement 11, also der Bodenbereich 16 und die umlaufende Seitenwand 12, ein und dieselbe Ausführungsform einer Zusammensetzung wie vorstehend beschrieben. Es ist jedoch auch denkbar, dass das Basiselement 11 wie auch der Kapseldeckel 21 ein und dieselbe Ausführungsform einer Zusammensetzung wie vorstehend beschrieben umfassen.

Figur 2 zeigt eine perspektivische Ansicht eines längs halbierten Basiselements 11a einer beispielhaften Portionenkapsel. Nebst einem Teil des Bodenbereichs 16 und des Flansches 14 ist ein Teil der Seitenwand 12 dargestellt. Ein möglicher Materialaufbau des Basiselements 11a wird nachfolgend in Figur 3 anhand eines schematischen Querschnitts durch die Seitenwand 12 im Bereich X noch näher beschrieben.

Figur 3 zeigt einen Querschnitt durch eine Seitenwand eines Basiselements im Bereich X aus Figur 2, exemplarisch für den Aufbau des gesamten Basiselements 11, also des umlaufenden Kragens 14, der Seitenwände 12 und des Bodenbereichs 16. Die Seitenwand weist eine Sandwichstruktur aus zwei aussenliegenden Schichten 1 auf, welche jeweils aus einer Zusammensetzung bestehend aus 80 Gew.-% Polybutylensuccinat (PBS), 19 Gew.-% amorphem Poly(3-hydroxybutyrat-co-4-hydroxybutyrat) mit 30 Gew.-% 4-Hydroxybutansäure-Anteil (entsprechend 12 Gew.-% 3-Hydroxybutansäure und 7 Gew.-% 4-Hydroxybutansäure), und 1 Gew.-% Talkum, jeweils bezogen auf das Gesamtgewicht der Zusammensetzung der aussenliegenden Schichten 1, gebildet sind. Die von den zwei aussenliegenden Schichten 1 eingeschlossene Zwischenschicht 2 besteht aus einem Polyvinylalkohol, der, aufgrund seiner hydrophilen Eigenschaften und Wasserstoffbrücken zwischen den Polymerketten eine Barriere gegenüber Fetten, Ölen und Sauerstoff bereitstellt. Bei der Zwischenschicht 2 handelt es sich also um eine Barriereschicht. Der Massenanteil der beiden aussenliegenden Schichten 1 beträgt jeweils 49 Gew.-% und der Massenanteil der Zwischen- oder Barriereschicht 2 beträgt 2 Gew.-%, jeweils bezogen auf das Gesamtgewicht des Basiselements 11.

### Vergleichsversuche

Mit Hilfe der folgenden Vergleichsversuche konnte der vorteilhafte Effekt beispielhaft belegt werden.

### Materialien

Getestet wurden Proben bestehend aus verschiedenen Materialien unter zwei verschiedenen Bedingungen gemäss Vergleichsversuch 1 (thermophil anaerob) und Vergleichsversuch 2 (aerob). "A" bezeichnet Proben aus mikrokristalliner Cellulose (20 µm, 42% TOC); "B" bezeichnet Proben aus einer Zusammensetzung aus 81 Gew.-% Polybutylensuccinat (PBS) und 19 Gew.-% Poly(3-hydroxybutyrat-co-4-hydroxybutyrat (P(3HB-co-4HB)) mit einem Massenanteil an 4-Hydroxybutansäure von 30 Gew.-%, bezogen auf das Gewicht von Poly(3-hydroxybutyrat-co-4-hydroxybutyrat), entsprechend 12 Gew.-% 3-Hydroxybutansäure und 7 Gew.-% 4-Hydroxybutansäure, bezogen auf das Gesamtgewicht der Zusammensetzung "B"; "C" bezeichnet Proben aus Polybutylensuccinat (PBS). Sämtliche zur Probenherstellung benötigte Materialien sind kommerziell verfügbar.

### Vergleichsversuch 1 (Thermophil Anaerob)

Der biologische Abbau unter thermophil anaeroben Bedingungen wurde gemäss dem in der Norm ISO 15985 (Kunststoffe - Bestimmung des endgültigen anaeroben biologischen Abbaus und der Desintegration unter anaeroben Vergärungsbedingungen mit hohem Feststoffgehalt - Verfahren durch Analyse des freigesetzten Biogases (2014)) beschriebenen Prüfverfahren bestimmt. Die Norm ISO 15985 ist gleichwertig mit der Norm ASTM D5511. Die Tests wurden gemäss ISO 15985 unter Screening-Bedingungen durchgeführt. Konkret wurden jeweils zwei oder drei Parallelversuche in 1000-mL-Inkubationsflaschen bei einer Inkubationstemperatur von 52 °C und einer Substratfeuchte von 60% - 95% über eine Inkubationszeit von 32 Tagen durchgeführt. Das verwendete Inokulum wies eine Trockenmasse von 26.7%, einen pH-Wert von 8.8, einen Gehalt an flüchtigen organischen Säuren <1.0 g/kg, einen Gehalt an Ammoniak-Stickstoff (NH4-N) von 1.8 g/kg, und eine Inokulummasse pro Inkubationsflasche von 500 g auf, wobei die Vorinkubation des Inokulums 15 Tage betrug. Die Probenmasse pro Inkubationsflasche betrug 15.0 - 16.0 g/1000 g, mit einem organischen Kohlenstoffgehalt von 4.3 - 5.0 g.

Die Testeinheit bestand aus einem von oben nach unten in Abständen von 2 mL graduierten Eudiometer mit einem Volumen von 400 mL. Dieses ist mit der Inkubationsflasche mit einem Fassungsvermögen von 1000 mL und einem Schliff verbunden. Durch den Boden des Eudiometerrohrs wird ein Verbindungsrohr geführt, damit das in der Inkubationsflasche erzeugte Gas in das Eudiometerrohr eindringen und auf diese Weise die Sperrflüssigkeit durch einen Schlauch in eine Nivellierflasche mit einem Fassungsvermögen von 750 mL verdrängen kann. Als Sperrflüssigkeit für die volumetrische Biogasmessung wurde eine saure Lösung mit hohem Salzgehalt verwendet.

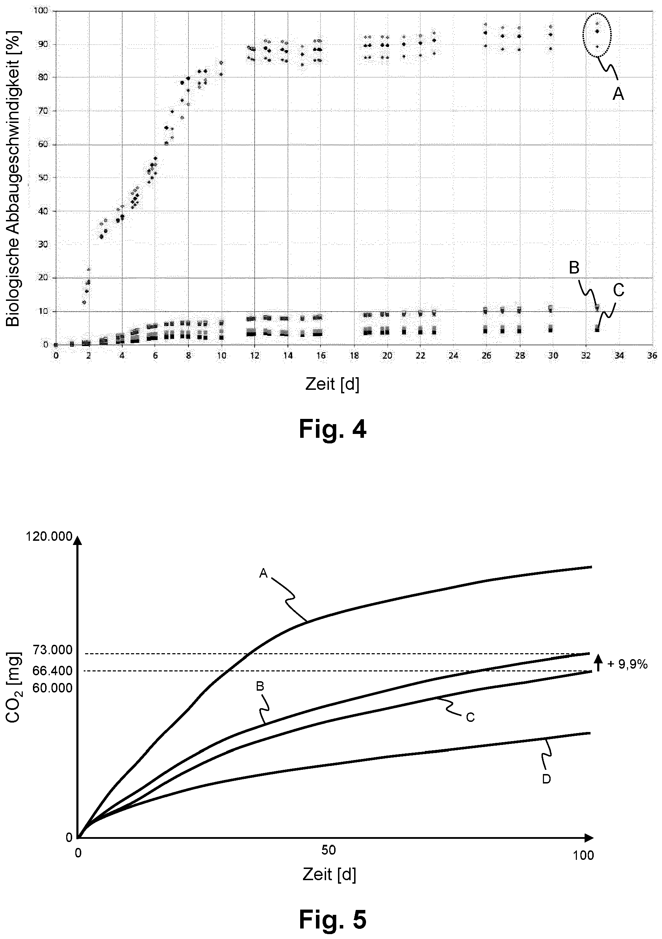

Wie aus der nachfolgenden Tabelle und den in Figur 4 dargestellten biologischen Abbaubarkeitskurven ersichtlich ist, ist die biologische Abbaubarkeit der erfindungsgemässen Probe "B", berechnet aus dem Kohlenstoffgehalt des Biogases im Test nach ISO 15985, nach Ablauf von 32 Tagen im Durschnitt um etwa 100% höher, also etwa doppelt so hoch, als die prozentuale biologische Abbaubarkeit der entsprechenden Probe "C" ohne amorphes Polyhydroxyalkanoat Copolymer. Für Probe "A" beziehen sich die in der Tabelle angegebenen Werte jeweils auf den aus drei Parallelversuchen erhaltenen Mittelwert. Im Falle der Proben "B" und "C" beziehen sich die in der Tabelle angegebenen Werte jeweils auf den aus zwei Parallelversuchen erhaltenen Mittelwert.

| Probe | Produziertes Biogas [mL] | Netto-Biogasmenge [mL] | Kohlenstoffgehalt in der Netto-Biogasmenge [g] | Biologische Abbaurate [%] |
|---|---|---|---|---|
| A | 7812 | 5869 | 3.14 | 93.0 |
| B | 2797 | 854 | 0.46 | 10.6 |
| C | 2340 | 397 | 0.21 | 4.8 |

### Vergleichsversuch 2 (Aerob)

Der biologische Abbau unter aeroben Bedingungen wurde nach ISO 14855-1 (Bestimmung der vollständigen aeroben Bioabbaubarkeit von Kunststoff-Materialien unter den Bedingungen kontrollierter Kompostierung - Verfahren mittels Analyse des freigesetzten Kohlenstoffdioxides - Teil 1: Allgemeines Verfahren (Dezember 2012)) bestimmt. Die theoretische Menge an Kohlenstoffdioxid (ThCO₂) der Referenzprobe "A", also der mikrokristallinen Cellulose, beträgt 132.2 g/50 g Feuchtmasse. Es wurden jeweils zwei oder drei Parallelversuche in 2000-mL-Inkubationsflaschen bei einer Inkubationstemperatur von 58 °C über eine Inkubationszeit von 100 Tagen durchgeführt. Das verwendete Inokulum wies eine Trockenmasse (dry solids, ds) von 52.8%, 31.5% ds flüchtige Feststoffe (volatile solids, vs), und einen pH-Wert von 8.2 auf. Jede Inkubationsflasche wurde mit 600 g einer Kompostmatrix bestehend aus Kompost und Vermiculit als Mix-Komponente befüllt, wobei das Verhältnis von Kompost zu Vermiculit 15:1 und der pH-Wert der Kompostmatrix 8.3 betrug. Das Verhältnis der Trockenmassen des Inokulums und der Proben betrug jeweils 5.9:1. Als Apparatur wurde ein Respirometer (Fa. ECHO d.o.o.) eingesetzt. Der Luftstrom betrug in der ersten Woche 500 mL/min und in den Folgewochen jeweils 200 mL/min. Im Zuge der Versuche wurde die Aktivität des Inokulums in drei Blindproben "D1-D3" bestimmt, indem die Kohlenstoffdioxid-Produktion in den jeweiligen Blindproben nach 10 Tagen bestimmt wurde:

| | D1 | D2 | D3 | Mittelwert |
|---|---|---|---|---|
| CO₂-Produktion nach 10 Tagen [mg] | 12642 | 12585 | 12457 | 12561 |
| Flüchtige Feststoffe (vs) Kompost [g] | 92 | 92 | 92 | 92 |
| CO₂ [mg/g vs] | 138.1 | 137.4 | 136.0 | 137 |

Das Kohlendioxid, das sich aus den Blindproben "D" entwickelte, betrug nach 10 Tagen 137 mg/g flüchtige Feststoffe. Der als Inokulum verwendete Kompost zeigte also eine ausreichende biologische Aktivität.

Wie aus der nachfolgenden Tabelle und den in Figur 5 dargestellten biologischen Abbaubarkeitskurven ersichtlich ist, betrug die biologische Abbaurate der Proben "C" enthaltend lediglich Polybutylensuccinat (PBS) nach 100 Tagen insgesamt 76.5% bzw. 89% der maximalen Abbaurate der Referenzproben "A". Im selben Zeitraum betrug die biologische Abbaurate der erfindungsgemässen Proben "B" enthaltend Polybutylensuccinat (PBS) und amorphes Polyhydroxyalkanoat Copolymer (aPHA) insgesamt 95.9% bzw. 112% der maximalen Abbaurate der Referenzproben "A". Anders ausgedrückt wiesen die Proben "B" enthaltend amorphes Polyhydroxyalkanoat Copolymer (aPHA) nach 100 Tagen im Mittel eine um etwa 10% höhere Kohlenstoffdioxid-Produktion im Vergleich zu den Proben "C" ohne amorphes Polyhydroxyalkanoat Copolymer (aPHA) auf.

| Probe | CO₂-Produktion [g] | Netto-CO₂-Produktion [g] | Biol. Abbaurate: CO₂-Prod. in % ThCO₂ |
|---|---|---|---|
| A | 109.2 | 66.4 | 86.0 |
| B | 73.0 | 30.2 | 95.9 |
| C | 66.4 | 23.6 | 76.5 |
| D | 42.8 | - | - |

Die biologische Abbaurate der Referenzprobe "A" lag nach 37 Tagen bei >70%. Der Unterschied zwischen dem prozentualen biologischen Abbau der Referenzsubstanz "A" in den drei Parallelversuchen betrug nach 100 Tagen 4%. Schliesslich betrug die Kohlenstoffdioxid-Produktion in der Blindprobe "D" nach 10 Tagen 50-150 mg/g flüchtige Feststoffe. Somit erfüllen die Ergebnisse die Validitätskriterien der ISO-Norm 14855-1 (2012).

## Patentansprüche

1. Zusammensetzung, insbesondere zur Herstellung von Portionenkapseln, umfassend
i. Polybutylensuccinat (PBS), und
ii. mindestens ein amorphes Polyhydroxyalkanoat (aPHA) Copolymer von
a) 3-Hydroxybutansäure (3HB) und
b) mindestens einem von 3-Hydroxybutansäure (3HB) verschiedenen Comonomer,
wobei der Massenanteil an Polybutylensuccinat (PBS), bezogen auf das Gesamtgewicht der Zusammensetzung, zwischen 75 Gew.-% und 90 Gew.-% beträgt,
wobei der Massenanteil an amorphem Polyhydroxyalkanoat (aPHA) Copolymer, bezogen auf das Gesamtgewicht der Zusammensetzung, zwischen 10 Gew.-% und 25 Gew.-% beträgt, und
wobei der Massenanteil des mindestens einen von 3-Hydroxybutansäure (3HB) verschiedenen Comonomers, bezogen auf das Gewicht des amorphen Polyhydroxyalkanoat (aPHA) Copolymers, zwischen 25 Gew.-% und 85 Gew.-% beträgt.

2. Die Zusammensetzung gemäss Anspruch 1, wobei das mindestens eine von 3-Hydroxybutansäure verschiedene Comonomer ausgewählt wird aus der Gruppe bestehend aus 3-Hydroxypropionsäure (3HP), 3-Hydroxyvaleriansäure (3HV), 4-Hydroxybutansäure (4HB), 5-Hydroxyvaleriansäure (5HV), 3-Hydroxyhexansäure (3HH), 3-Hydroxyoctansäure (3HO) und Kombinationen aus diesen Verbindungen, insbesondere 4-Hydroxybutansäure (4HB).

3. Die Zusammensetzung gemäss Anspruch 1 oder 2, wobei der Massenanteil an amorphem Polyhydroxyalkanoat (aPHA) Copolymer, bezogen auf das Gesamtgewicht der Zusammensetzung, zwischen 18 Gew.-% und 22 Gew.-% beträgt, vorzugsweise in etwa 20 Gew.-%.

4. Die Zusammensetzung gemäss einem der vorangehenden Ansprüche, wobei der Massenanteil an 3-Hydroxybutansäure (3HB), bezogen auf das Gesamtgewicht der Zusammensetzung, zwischen 9 Gew.-% und 15 Gew.-%, bevorzugt zwischen 11 Gew.-% und 13 Gew.-%, besonders bevorzugt etwa 12 Gew.-%, beträgt.

5. Die Zusammensetzung gemäss einem der vorangehenden Ansprüche, wobei der Massenanteil an von 3-Hydroxybutansäure (3HB) verschiedenem Comonomer, insbesondere von 4-Hydroxybutansäure (4HB), bezogen auf das Gesamtgewicht der Zusammensetzung, zwischen 4 Gew.-% und 10 Gew.-%, bevorzugt zwischen 6 Gew.-% und 8 Gew.-%, besonders bevorzugt etwa 7 Gew.-%, beträgt.

6. Die Zusammensetzung gemäss einem der vorangegangenen Ansprüche, wobei die Zusammensetzung im Vergleich zu einer Referenzzusammensetzung ohne amorphes Polyhydroxyalkanoat (aPHA) Copolymer eine wenigstens 25% schnellere biologische Abbaugeschwindigkeit, bestimmt nach ISO 14855-1, aufweist und/oder eine wenigstens 90% schnellere biologische Abbaugeschwindigkeit, bestimmt nach ISO 15985.

7. Portionenkapsel (10) bestehend aus oder umfassend eine Zusammensetzung gemäss einem der vorangehenden Ansprüche.

8. Die Portionenkapsel (10) gemäss Anspruch 7, aufweisend ein Basiselement (11) mit einem Bodenbereich (16) und einer umlaufenden Seitenwand (12), wobei der Bodenbereich (16) und die umlaufende Seitenwand (12) einen Innenraum zum Bevorraten eines mittels Wasser extrahierbaren Getränkeausgangsstoffs, insbesondere von Kaffee oder Tee, bilden, wobei der Bodenbereich (16) und die umlaufende Seitenwand (12) bevorzugt aus derselben Zusammensetzung gemäss einem der Ansprüche 1 bis 9 bestehen oder eine solche Zusammensetzung umfassen.

9. Die Portionenkapsel (10) gemäss Anspruch 8, ferner aufweisend einen Kapseldeckel (21), der den durch den Bodenbereich (16) und die umlaufende Seitenwand (12) gebildeten Innenraum verschliesst oder dazu eingerichtet ist, den durch den Bodenbereich (16) und die umlaufende Seitenwand (12) gebildeten Innenraum zu verschliessen, wobei der Kapseldeckel (21) bevorzugt aus einer Zusammensetzung gemäss einer der Ansprüche 1 bis 9 besteht oder eine solche umfasst.

10. Die Portionenkapsel (10) gemäss Anspruch 8 oder 9, wobei das Basiselement (11) und/oder der Kapseldeckel (21) eine Schicht (2) ausgewählt aus der Gruppe bestehend aus einer Versiegelungsschicht, einer Barriereschicht und einer Kombination aus diesen Schichten, aufweist oder aufweisen.

11. Verfahren zur Herstellung einer Portionenkapsel (10) gemäss einem der Ansprüche 7 bis 10, das Verfahren umfassend die folgenden Schritte:
a) Mischen und/oder Aufschmelzen einer Zusammensetzung gemäss einem der Ansprüche 1 bis 6, vorzugsweise in einem Extruder, zum Erhalt eines Polymerblends;
b) Umformen, insbesondere Tiefziehen oder Spritzgiessen, des in Schritt a) erhaltenen Polymerblends zum Erhalt der Portionenkapsel (10);
c) Optional, Befüllen der in Schritt b) erhaltenen Portionenkapsel (10) mit einer Portion eines Getränkeausgangsstoffs und Verschliessen der mit dem Getränkeausgangsstoff befüllten Portionenkapsel mit einem Kapseldeckel (21), insbesondere durch Verschweissen eines Kapseldeckels (21) umfassend eine Zusammensetzung gemäss einem der Ansprüche 1 bis 6 mit einem Basiselement der Portionenkapsel (10).

12. Verwendung einer Zusammensetzung nach einem der Ansprüche 1 bis 6 zum Verpacken eines Getränkeausgangsstoffs, insbesondere von Kaffee oder Tee.
